# EUROPEAN PATENT APPLICATION

(11) **EP 3 363 716 A1**
(43) Date of publication of application: **22.08.2018**
(21) Application number: 16855840.1
(22) Date of filing: 10.10.2016
(51) Int. Cl.: B62D 57/02, B62D 57/032, A61G 5/06

(54) **CHASSIS WITH STEPPING WHEEL PROPULSION MEMBERS FOR TRAVELING OVER DIVERSE SUPPORTING SURFACES**

(30) Priority: 12.10.2015 RU 2015143484
(71) Applicant: Tetrabot LLC, Syktyvkar 167000 (RU)
(72) Inventor: GERTNER, Dmitry Alexandrovich, Syktyvkar 167000 (RU)
(74) Representative: Chimini, Francesco
(86) International application number: PCT/RU2016/050050
(87) International publication number: WO 2017/065649

(57) **Abstract**

Chassis for transportation on various support surfaces with wheel-stepper propulsion devices relate to trackless vehicles, in particular to point walking propulsion devices and may be best used 5 for the movement of controlled and autonomous vehicles on cross-border terrain, including marshy and water barriers, farmland and snow cover. And in urban environment can be effectively used to move on ladders and other threshold obstacles, including the possibility of moving on badly-organized areas at the entrances of buildings. Unlike known analogues, this device is characterized by simplicity, high ground clearance, smooth running.

The chassis contains wheel-stepper propulsion devices. Each wheel-step propulsion device consists of at least three supports fixed on the common shaft symmetrically relative to the axis of rotation of the shaft and inclined to each other, forming lateral edges of an imaginary pyramid. wherein the shaft is located at an angle to the reference surface so that the reference surface is touched by no more than two supports from each wheel-stepper propulsion device at the same time. And the shaft is fixed in a movable manner with the possibility of transverse movements and is kinematically connected with the compensator of oscillations. The oscillation compensator is fixed on the chassis. Several variants of oscillation compensators are presented: using the cam mechanism, with the use of the crank-connecting mechanisms, using the general lever of two antiphase rotating wheel-stepper propulsion devices and with the use of telescopic supports with springs inside.

The supports of the wheel-stepper propulsion devices can be fitted with shoes dressed in spherical heels supports. In cases where only one wheel is installed on the chassis, the wheel-step propulsion device, a guided rotation mechanism is installed between the shoe and the support such as an electric motor with a gearbox. If the chassis need to be rotated, this rotation mechanism rotates the support and all the chassis with it in the desired direction when the shoe is still on the support surface. The supports themselves can be made form sealed volumetric bodies, which will allow to move the chassis on water. And to move the chassis on the stair flights of different size supports are made with the ability to change its length. The operator or automatic controls of the vehicle shall determine by means of instruments the dimensions of stair flights - the height and depth, and adjust the length of the supports to these dimensions.

## Description

The invention refers to trackless vehicles, in particular to point walking propulsion devices. Primary area of use of the invention-vehicles of increased terrain crossing capacity, robotics, devices for the movement of wheelchairs and cargo carriages on the steps of stairs and ledges.

Well-known wheeled propulsion devices containing wheels on axes, articulated by springs with a frame of the vehicle, having big resistance to movement due to tread way sagging due to weight of the machine at reel on a support area and practical impenetrability on snowy terrain.

A walking propulsion device is known, containing the installed on each side hulls with two elongated supporting stepping elements, each of which is connected by its ends with a phase offset of 180 ° relative to each other by the necks of the cranks of the crankshafts, which are installed in the hull with the help of horizontal and vertical elastic connections, made in the form of pre-guide springs, interacting with the bearings of the root necks of the crankshaft and the hull (see RU, patent Nº 2001817, CL. In 62 D 57/032, 1993).

The essential drawback of it are the laying of a continuous tread way upon movement and the difficulty of compensating for motion fluctuations.

A walking propulsion device is known, containing vertically four heels, installed in the middle with elastic connection in the form of flat springs hinged on the ends of the double-levers, the latter are hinged with elastic coupling in the form of springs by middle part at the ends of the double-lever with the hub in the middle part, articulated with the leading shaft or machine axis (see RU Nº 2104164, CL. At 60 in 15/20).

Lockheed machine is known, its propulsion device contains three levers, installed at an angle 120° to each other. The propulsion devices are mounted on the sides of the chassis. On soft soils levers rotate so that each tricycle operates as one wheel equipped with large cylindrical ground lugs.

Another analogue-a propulsion device contains four levers, at the ends of the levers are installed feet or wheels.

Another analogue. A propulsion device can be made in the form of a isosceles triangle with wheels placed on the angles, which are rotated simultaneously with the triangle connected to the manual trolley body with the axis of rotation located eccentrically in relation to the geometric center of the triangle.

These analogues do not provide smoothness of the course (constancy of the value of clearance) of the running gear in walking mode when moving on a solid level ground. As a result the elements of the structure are loaded by dynamic jerks when walking upon resistance to the movement along the support area.

Another direction of increasing the penetrability is the use of propulsion devices, alternately rolling over each other. Thus, is known a wheel-stepping propulsion device of a vehicle containing a wheel, the main lever mounted in a turning like manner in the vehicle's hull the lever and wheel rotation drive, kinematic transmission, located in the main lever consisting of joined gears with parasitic gear, a satellite and a bloc of alternating clutch of the solar gear with the body and with the main lever, while the main lever is the second parasitic gear with satellite, deployed around the axis of the wheel relative to the first gear at 180o, the wheel consists of two segments, equipped with additional levers with their additional kinematic transmissions, whose directed links are rigidly connected by their axes with segments, the leading segments are rigidly connected to the main lever coaxially with the axes of satellites, and the additional levers are rigidly installed on the axes of the latter. In a wheel-propulsion mode one of the segments contacting with the ground, rolls on it, and the other moves in an accelerated fashion above a surface of the ground before contacting with it. At this point, both segments are separated at a distance equal to a step. The hull of the vehicle during this time will move by a value equal to half of a step. Further, the segment, which had previously been in contact with the ground, breaks away from it and moves similarly to the one described above.

The drawback of the known solution is the small height of barriers able to be overcome not exceeding the radius of the segment.

The wheel-stepper propulsion device can be considered as the closest analogue-prototype patent Nº 2038248. This prototype contains a wheel hub, a pair of levers, articulated with support heels. With hinge hulls located on the periphery of hub faces, articulated with the axle or with the shaft of the machine, through the specified pair of levers, articulated joints, heel bearings linked by joints. In the hull space of joints are fitted with preliminarily tensed rubber cushions included in the contact with lever support. In the free position the heels are perpendicular to the axes of the levers under the influence of the preliminary tensed cushions. At rotation of the wheel the forward running heel's heel touches a support area, inflecting by the weight of the propulsion device with cushions on coupling of levers relative to their axes and creating reactive force directed in the direction of movement relative to the support area at transitioning the weight of the propulsion device onto the front running heel.

The drawbacks of this prototype are low clearance, as well as the complexities and complexity of the structure, and as a consequence low reliability and slow propulsion speed.

Technical problems solved by the invention: smooth point stepping on reference surfaces, simplification of mover design due to original technical solutions, without significantly increasing the radius of the wheel-step propulsion devices. As well as the solution of such associated tasks as moving on water and stair flights.

The achieved technical result - increase of reliability and speed of movement, increase of penetrability at the expense of increase of ground clearance. In addition, the simplification of the mover design allows the use of sealed volumetric bodies for the possibility of moving the vehicle on such chassis on the water.

The technical result is achieved by the fact that the chassis of the vehicle for movement on various support surfaces contain wheel-stepping propulsion devices.

Each wheel-step propulsion device consists of at least three supports fixed on the common shaft symmetrically relative to the axis of rotation of the shaft and inclined to each other, forming the lateral edges of the imaginary pyramid. At the same time the shaft is located at an angle to the reference surface so that the reference surface is touched by no more than two supports from each wheel-stepper propulsion device simultaneously. Moreover, the shaft is fixed with the possibility of transverse movements and is kinematically connected with the compensator of oscillations. The oscillation compensator is fixed on the chassis.

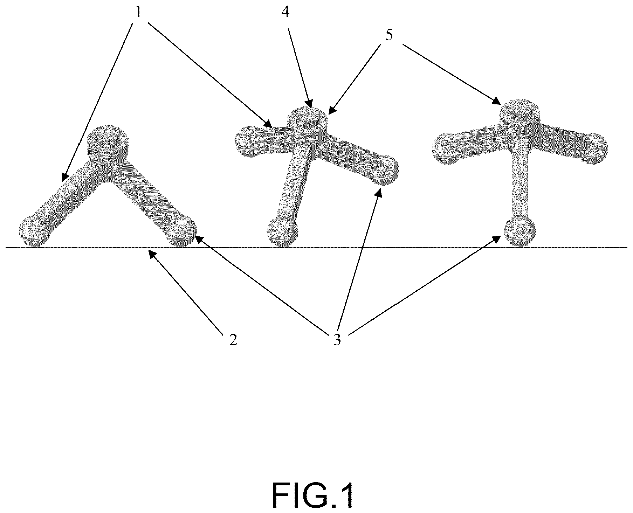

Fig. 1 shows a wheel-step propulsion device's side view in different positions of supports 1 relative to the reference surface 2. at the end of each support there is a spherical heel 3.

Supports 1 converge on the common shaft 4, which rotates in the hub 5. The side view shows that the wheel-stepped propulsion devices at rotation of the shaft 4 move to the left or to the right, depending on the direction of rotation.

In another variant, support 1 can be mounted on the hub rotating on the shaft, which does not change the essence of the invention.

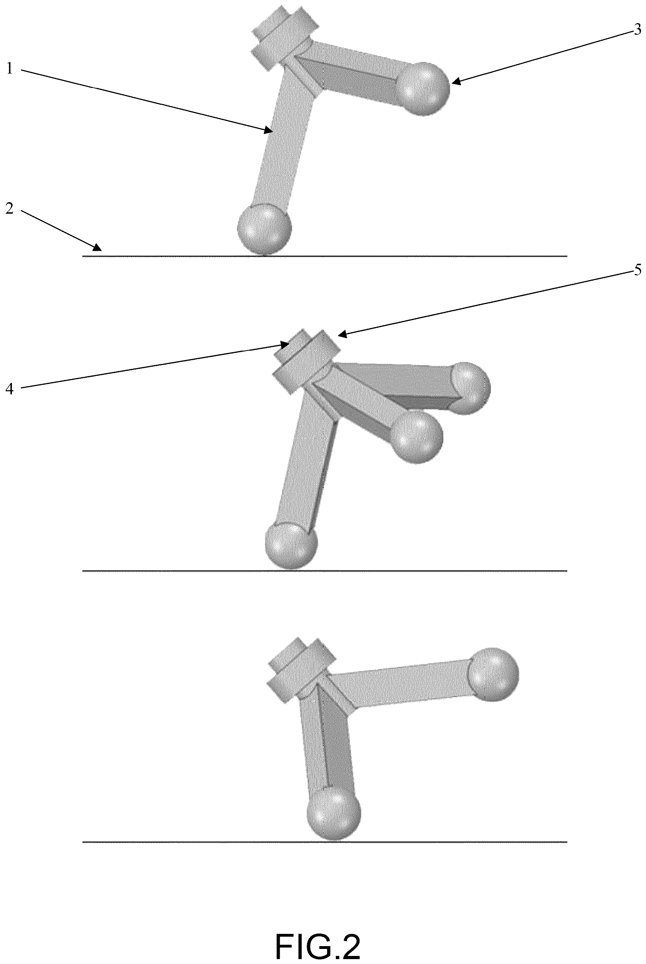

Fig. 2 shows the same wheel-step propulsion device's front view in different positions of the support 1 relative to the reference surface 2.

The most optimal number of supports is equal to three, the angle between supports 1 equals 90 degrees, and the angle between each support 1 and the axis of rotation of the shaft 4 equals the value of arccos (1/√ 3). In private cases, there may be other variants of the number of supports and angles between them, which does not change the essence of the invention.

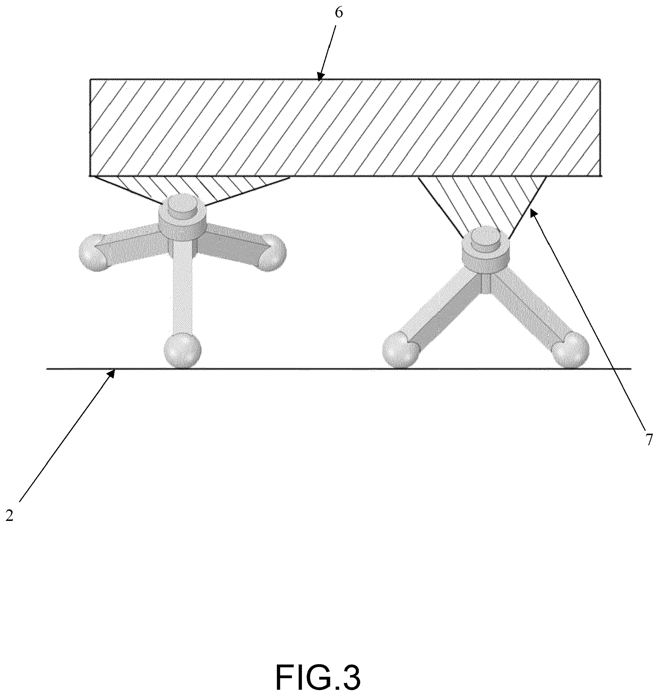

Fig. 3 shows chassis 6, with wheel-step propulsion devices, fixed to the chassis 6 through vibration compensators 7. As is seen, the oscillators 7 allow you to automatically adjust the height of the shaft 4 at different positions of supports 1.

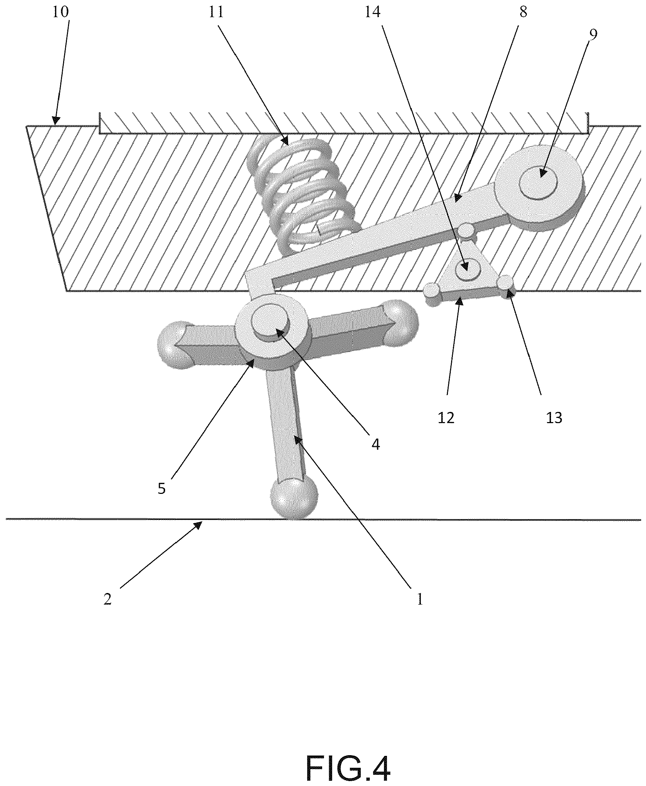

Fig. 4 shows the variant of the oscillation compensator in the assembly with the wheel-step
propulsion device. The oscillation compensator consists of lever 8, swinging on the fixed axis 9, fixed on the frame of the chassis 10. At the free end of lever 8 is fixed hub 5, in which on the shaft 4 supports 1 rotate. On top of lever 8 acts a return spring 11, and from below on lever 8 there is a cam mechanism 12 consisting of three rollers 13 and rotating on a shaft 14 passing through a frame of a chassis 10. Shaft 4 and cam mechanism 12 are rotated from the general drive and rotate synchronously with the same frequency, which allows to completely smooth out the oscillations of the shaft 4. The cam mechanism with rollers 13 lifts the lever 8 upwards and the return spring 11 lowers the lever 8 downwards.

Alternatively, the cam mechanism in the oscillation compensator is replaced by two crank-connecting mechanism, working in the antiphase and kinematically connected with the drive wheel-stepper propulsion device.

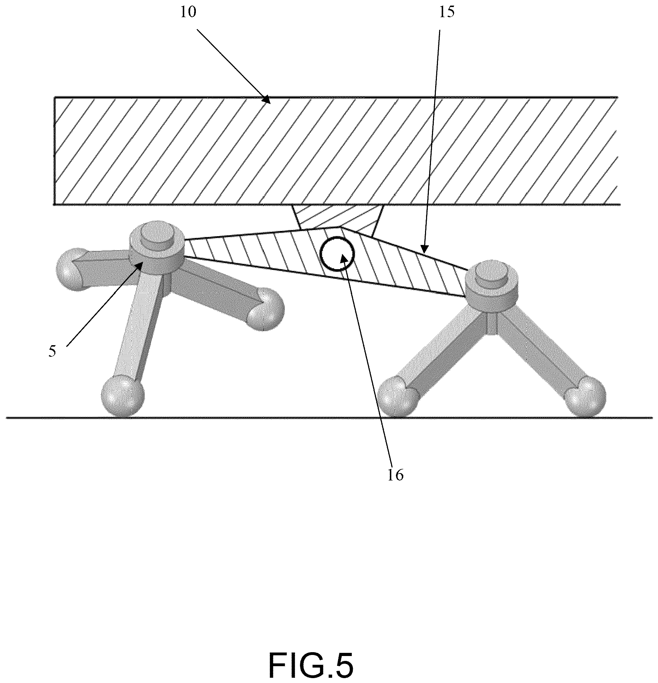

Fig. 5 shows the third variant of the oscillation compensator. When using an even the number of wheel-step propulsion devices, each pair has a common compensator of oscillations, which consists of a common lever 15, swinging on the stationary axis 16, mounted on frame 10 chassis. In this case, in each pair of wheel-step propulsion devices the shafts are brought in synchronous rotation from the general drive, and supports on data of shafts establish in an antiphase.

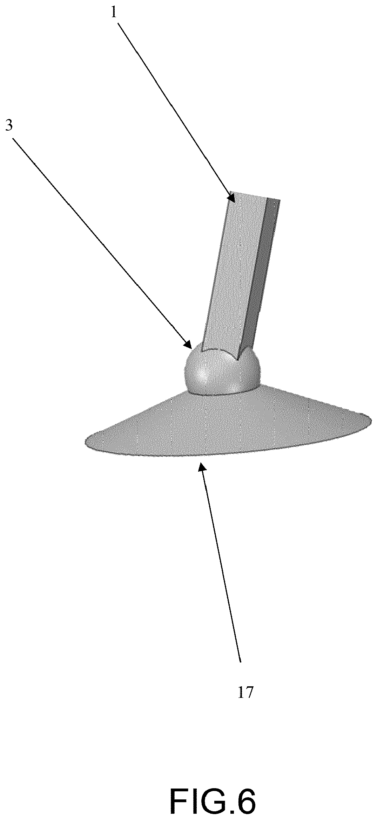

Fig. 6 shows the variant of the wheel-stepper mover with support shoes 17, Clad on spherical heels of the three pillars 1. In general, the shoe 17 rotates freely on the spherical heel 3. In some cases, for example, if only one wheel-step propulsion device is installed on the chassis, a controlled rotation mechanism, such as an electric motor with a gearbox, is located between the shoe 17 and the support 1. It serves for maneuvering. If the chassis needs to be rotated, then this rotation mechanism rotates the support 1 and all the chassis with it in the desired direction, with the shoe 17 keeps still on the reference surface. The rotation is performed when the reference surface is touched by only one shoe 17. When used on the chassis of only one wheel-stepper propulsion device, to ensure stability, on the chassis a power gyroscope is installed. And the stable position of the chassis in the stationary state is provided by an additional mechanism of rotation of the shaft 4 with respect to frame 10 of the chassis in such a position in which all three supports 1 touch the reference Surface 2.

In other cases, maneuvering is carried out by turning the wheel-step propulsion devices. The rotation of the wheel-stepper mover is carried out only when the reference surface is touched by one support of this wheel-stepper propulsion device. When three or more wheel-stepper propulsion devices are used on the chassis, for the possibility of maneuvering is used a mechanism that leads to simultaneous and synchronous rotation in the common plane simultaneously all-wheel-stepping propulsion device, provided that at the moment each of them touches the reference surface with only one support. At the same time wheel-stepper propulsion devices work synchronously.

Such way of maneuvering allows to turn around up to 360 degrees. If the supports are used by shoes 17, the shoes, which at the time of maneuvering are immobile on the reference surface, and the supports are freely rotating by spherical heels 3 in shoes 17.

For moving the chassis on water support surfaces, supports 1 can be made in the form of sealed volumetric bodies. In this case the vehicle will be able to move on the water just as well as on land.

And to move the chassis on the stair flights of different size supports are made with the ability to change its length. In this case each support is made in the form of a controlled telescopic mechanism of extension. The operator or automatics of the vehicle determines by means of devices the dimensions of steps of a stair flight-height and depth, and for these sizes adjusts length of supports 1, so that with each step the shoe 17 would rise approximately by the middle of a step . If such telescopic supports are used, the oscillation compensator can be made in the form of springs placed inside each telescopic support 1. The spring is located in such a way as to maximize the extension of the telescopic support 1. At rotation of a wheel-stepper propulsion device, the angle of position of telescopic supports 1 concerning a reference surface 2 changes and accordingly the load on each support changes.

Due to the reaction of the spring placed inside the telescopic support, the support length will change, thereby reducing the oscillation of the shaft of the wheel-stepper propulsion device.

The proposed invention can best be used for the movement of controlled and autonomous vehicles on cross-border terrain, including marshy and water barriers, farmland and snow cover. And in the city on ladders and other threshold obstacles, including the possibility to move on unfurnished areas at the entrances of buildings.

## Claims

1. Chassis for transportation on various support surfaces by wheel-stepper propulsion devices, each consisting of at least three supports fixed on the common shaft symmetrically relative to the axis of rotation of the shaft and inclined to each other, forming the lateral edges of the imaginary 5 pyramid, while the shaft is located at an angle to the reference surface in such a way that the support surface is touched by no more than two supports from each wheel-ball propulsion device and the shaft is simultaneously fixed with the possibility of transverse movements and is kinematically connected with the compensator of oscillations fixed on the chassis.

2. The chassis according to claim 1 wherein the fact that the supports are fixed on the hub, rotating on the shaft.

3. The chassis according to claim 1 wherein the fact that the angle between the adjacent supports is equal to 90 degrees, and the angle between the supports and the axis of rotation of the shaft is equal to the value arccos (1/√ 3).

4. The chassis according to claim 1 wherein the fact that the compensator of oscillations is made in the form of a cam mechanism with the number of cams equal to the number of supports on the wheel-step propulsion device and is kinematically connected with the drive of the wheel-stepper propulsion device.

5. The chassis according to claim 1 wherein the fact that the compensator of oscillations is made with the use of crank-rod mechanisms, kinematically connected with the drive of the wheel-stepper propulsion device.

6. The chassis according to claim 4 and 5 wherein the fact that the mechanism of the oscillation compensator includes a return spring.

7. The chassis according to claim 1 wherein the fact that when used on the chassis of an even the number of wheel-step propulsion devices, each pair of wheel-stepper propulsion devices are bound together by a common compensator of oscillations of lever type, given that in each pair of wheel-step propulsion devices shafts are brought into rotation from the general drive, and supports on data shafts are installed in an antiphase.

8. The chassis according to claim 1 wherein the fact that at the end of each support is fixed a movable support shoe.

9. The chassis according to claim 1 and 8 wherein the fact that when used on the chassis of only one wheel-stepper mover, for the possibility of maneuvering, the support shoe and its support are connected through a controlled mechanism of rotation.

10. The chassis according to claim 9 wherein the fact that an additional shaft rotation mechanism is included in relation to the chassis in a position where all the three supports touch the reference surface.

11. The chassis according to claim 1 wherein the fact that when used on the chassis of three or more wheel-step propulsion devices, for the possibility of maneuvering a mechanism is used that leads to simultaneous and synchronous rotation in the common plane of all the wheel-step propulsion devices, while the wheel-stepper propulsion devices are made with the possibility of synchronous movement.

12. The chassis according to claim 1 wherein the fact that the supports are made in the form of sealed volumetric bodies for the possibility of moving on water support surfaces.

13. The chassis according to claim 1 wherein the fact that the supports are made with the possibility to change its length for the ability to move around stair flights of different sizes.

14. The chassis according to claim 1 and 13 wherein the fact that the oscillation compensator is made in the form of telescopic supports and springs placed inside each support.
